Europäisches Patentamt

European Patent Office

Office européen des brevets

(11) Numéro de publication: **0 350 343 B1**

## FASCICULE DE BREVET EUROPEEN

(45) Date de publication de fascicule du brevet: **07.07.93**   (51) Int. Cl.⁵: **A01B 61/04**

(21) Numéro de dépôt: **89401453.9**

(22) Date de dépôt: **29.05.89**

(54) **Système hydraulique de sécurité pour charrue.**

(30) Priorité: **08.07.88 FR 8809311**

(43) Date de publication de la demande:
**10.01.90 Bulletin 90/02**

(45) Mention de la délivrance du brevet:
**07.07.93 Bulletin 93/27**

(84) Etats contractants désignés:
**CH DE ES FR GB IT LI SE**

(56) Documents cités:
**FR-A- 2 449 391**
**FR-A- 2 535 935**
**FR-A- 2 586 890**
**US-A- 4 353 423**

(73) Titulaire: **HUARD S.A.**
**Rue des Vauzelles**
**F-44142 Chateaubriant Cédex(FR)**

(72) Inventeur: **Gentilhomme, Guy**
**16, Rue de la Gare Louisgert**
**F-44110 Chateaubriant(FR)**

(74) Mandataire: **Serin, Jean-Pierre et al**
**Cabinet PIERRE LOYER 77, rue Boissière**
**F-75116 Paris (FR)**

Rank Xerox (UK) Business Services
(3.10/3.6/3.3.1)

## Description

La présente invention concerne les charrues du type dit "non-stop", c'est-à-dire munies d'un dispositif de sécurité qui permet à un soc heurtant un obstacle de pivoter vers le haut à l'encontre d'un système élastique qui le ramène en position de travail après le passage dudit obstacle. Plus précisément, l'invention concerne un perfectionnement à ce dispositif.

De tels dispositifs sont décrits dans les brevets français 2.535.935 et 2.586.890.

FR-A-2 586 890 décrit un dispositif correspondant aux préambules des revendications 1 et 4.

Selon le premier brevet cité, la sécurité hydraulique est constituée par un dispositif comprenant deux circuits en parallèle : un premier circuit d'ouverture muni d'une valve à ouverture tarée qui après ouverture est maintenue ouverte par la seule pression en provenance de l'accumulateur oléopneumatique ; un deuxième circuit de fermeture comportant un clapet anti-retour n'autorisant la circulation du fluide qu'en direction des vérins de sécurité montés sur chaque age.

Pour obtenir ce résultat, on a mis au point une valve comportant un clapet à tarage réglable qui obture un orifice de faible section et qui est monté concentrique et coulissant dans un piston de plus grande section également à tarage réglable.

Le sécurité hydraulique selon le deuxième brevet cité est constituée par un dispositif comportant deux clapets associés l'un à l'autre, le premier clapet étant un clapet à ouverture tarée réglable qui lorsqu'il s'ouvre provoque l'ouverture d'un deuxième clapet à tarage réglable à travers lequel s'écoule le liquide pendant le passage d'un obstacle, le premier clapet se refermant immédiatement après avoir provoqué l'ouverture du second.

Quelques difficultés sont apparues dans l'utilisation de ces valves, principalement lorsque l'on veut modifier le tarage du circuit en fonction de la résistance du terrain labouré.

En effet, dans ces deux dispositifs brevetés, lorsque l'on modifie la pression de gonflage de l'accumulateur oléopneumatique, il faut modifier le réglage long et précis du tarage de l'un et de l'autre clapets.

L'invention vise à palier cet inconvénient en réalisant un système hydraulique dans lequel le premier clapet à ouverture tarée réglable met en communication, après son ouverture, le vérin de l'age avec un second clapet à tarage fixe auto-équilibré quelle que soit la pression de gonflage de l'accumulateur.

Ce but est atteint dans un système hydraulique tel que décrit dans la revendication 1, et du type précité en ce que le second clapet comporte un tiroir , soumis à la pression d'un ressort, et dont le tarage varie automatiquement avec la pression de gonflage de l'accumulateur à travers un robinet automatique piloté qui relie l'accumulateur à la chambre du clapet située derrière le tiroir, ledit robinet étant normalement ouvert, quand la pression dans le vérin est égale à la pression de gonflage de l'accumulateur, tandis que, lorsque la pression dans le vérin augmente par suite de la butée du soc sur un obstacle, il se ferme, maintenant ainsi la pression de gonflage derrière le tiroir, qui se déplace par suite de l'ouverture du premier clapet pour une pression donnée, et fait communiquer le vérin avec l'accumulateur .

Selon l'invention l'ouverture et la fermeture du robinet piloté sont commandées par un piston de pilotage soumis d'un côté à la pression du vérin et de l'autre à celle de l'accumulateur.

Selon une forme particulière de réalisation de l'invention le tarage du clapet à tiroir se fait au moyen d'un second accumulateur oléopneumatique chargé à la pression de gonflage du premier accumulateur et d'un ressort.

Selon une autre forme de réalisation de l'invention telle que décrite dans la revendication 4, le second clapet est un clapet double dont le tarage du tiroir se fait au moyen de l'unique accumulateur oléopneumatique du système chargé à la pression de gonflage et d'un ressort, l'accumulateur étant relié à la chambre du clapet située derrière le tiroir tant que le clapet limiteur de pression est fermé, tandis que l'ouverture de ce dernier provoque le recul du tiroir avec la fermeture de la liaison entre la chambre arrière du clapet et l'accumulateur en même temps que l'ouverture de la liaison entre le vérin et l'accumulateur.

L'invention sera mieux comprise au moyen d'exemples de réalisation décrits ci-après et représentés sur le dessin annexé sur lequel on voit :

Figure 1 : un schéma de représentation symbolique d'une première solution à second clapet simple;

Figure 2 : une réalisation en coupe de la valve correspondante;

Figure 3 : un schéma en représentation symbolique d'un perfectionnement de la première solution;

Figure 4 : un schéma en représentation symbolique d'une solution à second clapet double.

Dans tous les cas de figure, on a représenté en 1 le coupleur hydraulique du tracteur, en 2 un robinet manuel, en 3 un manomètre de contrôle de la pression de gonflage du circuit de la sécurité hydraulique de la charrue, en 4 l'accumulateur oléopneumatique principal permettant le fonctionnement en "non-stop" de la charrue ayant au moins un timon en T portant au moins un soc (non représentée). En 5 le vérin hydraulique de la sécurité monté sur chaque timon ou age non-stop.

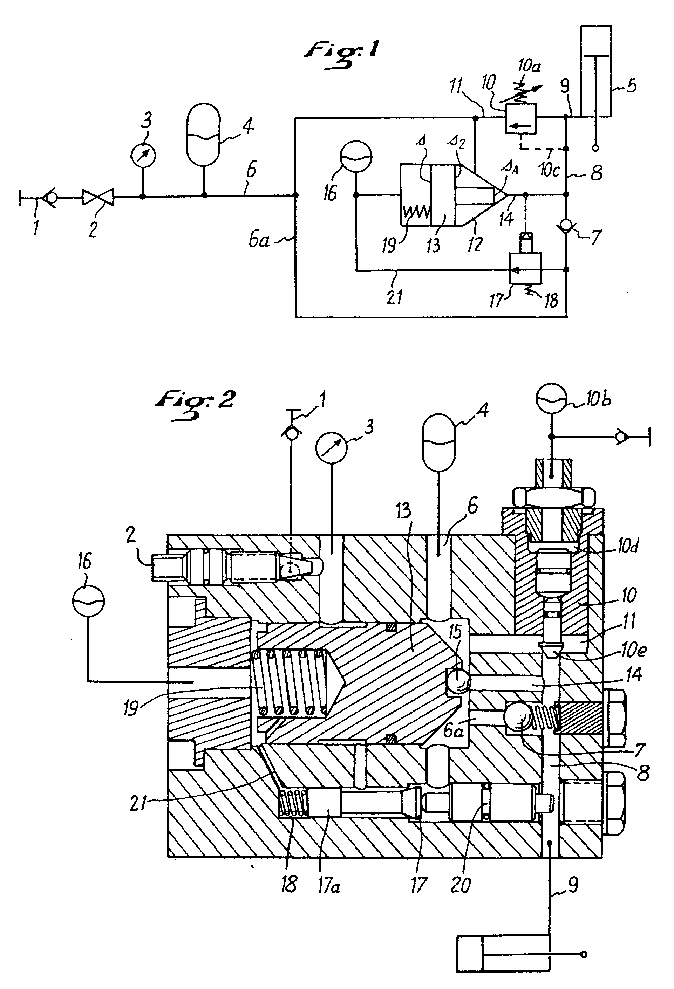

Une première réalisation est représentée sur les figures 1 et 2.

La communication entre le vérin 5 et l'accumulateur 4 se fait par deux circuits parallèles. D'une part, de l'accumulateur 4 vers le vérin 5 par les conduits 6, 6a, le clapet anti-retour 7 et le tuyau 9.

Dans le sens vérin 5 - accumulateur 4 on trouve le tuyau 9, le conduit 8 pour piloter un premier clapet limiteur de pression 10 par une conduite 10c qui lorsqu'il s'ouvre met en communication les conduites 8 et 11. Parallèlement au clapet 10 est monté un second clapet 12 pourvu d'un tiroir 13 ayant sur une face deux surfaces actives s1 et s2. Selon l'exemple de réalisation montré sur la figure 2, la surface s1 est constituée par la surface d'une bille appliquée contre l'ouverture de la conduite 14 reliant le clapet 12 à la conduite 8. La surface s2 est constituée par la section du tiroir moins la surface s1. Le rapport s2/s1 est choisi entre 50 et 100 de préférence. La surface s2 est en liaison avec l'accumulateur 4 tandis que la surface s1 est en liaison avec le vérin 5.

La face arrière du tiroir 13 de section $s = s2 + s1$ sert d'appui à un ressort 19 qui repousse le tiroir 13 de façon que la bille 15 obture le passage 14. Elle est en communication permanente avec un accumulateur oléopneumatique auxiliaire 16 quelle que soit la pression dans le vérin 5 et est en communication avec l'accumulateur principal 4 à travers un robinet piloté 17 normalement ouvert par la poussée d'un ressort 18 lorsque la pression dans le conduit 8 est égale à la pression dans le conduit 6. Le remplissage de l'accumulateur 16 étant possible par le jeu laissé entre le piston 17a du robinet 17 et son alésage ou par des rainures longitudinales.

Le robinet 17 est piloté par un piston 20 soumis d'un côté à la pression du vérin 5 et l'autre à celle de l'accumulateur 4.

Le réglage de tarage du limiteur de pression 10 peut être effectué soit par la tension d'un ressort 10a comme sur la figure 1, soit comme sur la figure 2 par la variation de pression dans un second accumulateur oléopneumatique auxiliaire 10b.

Le fonctionnement est le suivant :

Gonflage du circuit.

Le limiteur de pression 10 est détaré. On ouvre le robinet 2 pour remplir le circuit jusqu'à obtenir la pression de gonflage désirée (entre 8Mpa et 16Mpa (80 et 160 bars) dans les conditions moyennes). On a donc la même pression dans tout le circuit. Le ressort 19 du clapet 12 applique la bille 15 du tiroir 13 contre l'ouverture du conduit 14. Le robinet 17 est ouvert puisqu'il y a la même pression des deux côtés du piston 20.

Le limiteur de pression 10 est ensuite réglé pour ne s'ouvrir qu'à la pression de travail désirée correspondant à un certain effort sur chaque corps de labour.

On admet généralement que pour travailler dans des terres encombrées de cailloux ou à fond rocheux, l'effort sur chaque corps variera entre 600 et 1.200 kg ce qui, compte tenu de la section du clapet 10e obturant le conduit 8, correspond à une pression dans les vérins 5 de l'ordre de 8Mpa à 16Mpa (80 et 160 bars).

Lorsqu'on laboure dans des terrains lourds, l'effort sur chaque corps peut atteindre 3.000 kg.

Il faudra donc régler le limiteur de pression 10 pour que le clapet 10 ne se soulève que pour une pression importante dans le vérin 5 (proportionnellement de l'ordre de 30Mpa (300 bars)).

La puissance du ressort 19 est telle que, à ce réglage maximum du limiteur de pression 10, la bille 15 continue à obturer le conduit 14 de section s1.

Ainsi lorsque dans un terrain lourd le limiteur de pression 10 est réglé pour ne s'ouvrir qu'à 30Mpa, tant que cette pression n'est pas atteinte dans le vérin 5, les conduits 14 et 11 sont obturés. Lorsque dans ces conditions de travail le corps de labour rencontre un obstacle, la pression va monter instantanément dans le vérin 5, ce qui dans un premier temps va agir sur le piston 20, qui va fermer le robinet 17 et empêcher la circulation de l'huile entre le conduit 6 et 21 dans un deuxième temps ouvrir le passage par le clapet 10. Par le clapet 10 cette haute pression va donc s'établir sur la surface s2 du tiroir 13 et donc sur l'ensemble s1 + s2 et provoquer et maintenir l'ouverture du conduit 14 par lequel l'huile contenue dans le vérin 5 s'écoulera vers l'accumulateur 4 pendant toute la durée du passage de l'obstacle, le clapet 10 pouvant ou non revenir obturer le conduit 8. Lorsque l'obstacle sera passé, l'huile s'écoulera de l'accumulateur 4 vers le vérin 5 en soulevant le clapet anti-retour 7 jusqu'à ce que le corps de labour soit revenu à sa position initiale. La pression sera donc la même dans le conduit 5, 6 et 8 donc le piston 20 étant équilibré, le ressort 18 agira sur le robinet 17 pour rétablir la communication entre les conduits 6 et 21.

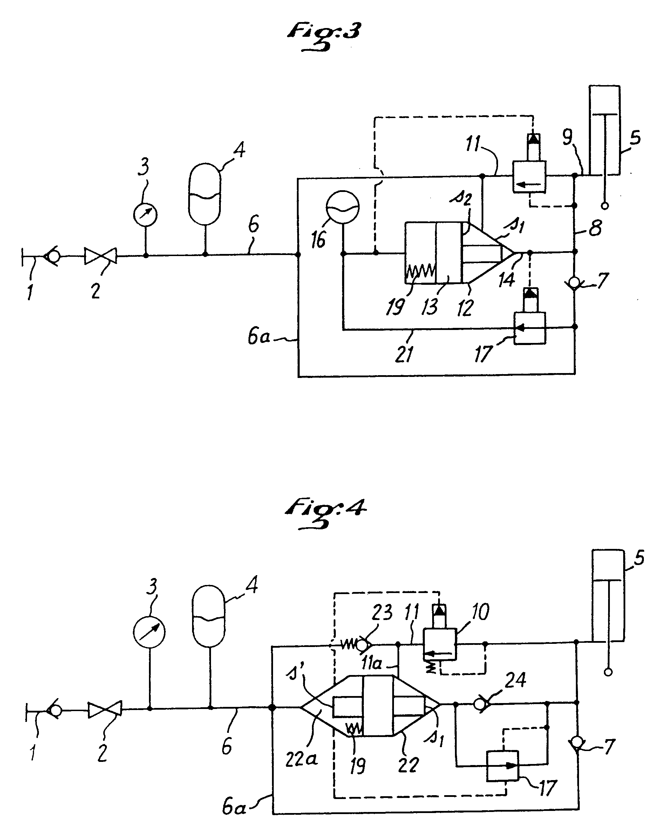

Sur la figure 3, on a supprimé l'accumulateur 10b servant au réglage du limiteur de pression 10 et on fait communiquer par un conduit de pilotage la chambre arrière du clapet à cartouche 12 et la chambre 10c du limiteur de pression 10.

Ainsi le réglage de l'ensemble sera plus facile car il suffira de calculer les surfaces actives des différents composants pour faire fonctionner la sécurité non-stop dans la plage de pression disponible sur le tracteur et compatible avec la variation de volume acceptable dans l'accumulateur 4.

Avec cette solution, l'effort de réenclenchement sera proportionnel à l'effort de déclenchement : si le terrain nécessite un tarage élevé du limiteur de pression 1Ø, cela signifie qu'il faut également que la pression nécessaire au retour du corps en position de travail soit importante.

Sur la figure 4, le schéma symbolisé représente un perfectionnement des systèmes précédents. Il n'y a plus qu'un seul accumulateur 4 pour remplir toutes les fonctions, le clapet simple est remplacé par un clapet double 22 et il est ajouté un clapet anti-retour taré 23 entre la jonction des conduits 6 et 6a d'une part et la jonction des conduits 11 et 11a d'autre part.

Ce clapet anti-retour taré 23 n'autorise la circulation de l'huile que vers l'accumulateur 4.

Le tarage du ressort du clapet 23 est tel que la pression nécessaire au soulèvement de la bille est supérieure de quelques bars à la pression donnée par le ressort 19 pour la fermeture de la surface s1 du clapet 22.

Par exemple, si le ressort 19 fournit un équivalent de pression de Ø,5Mpa (5 bars), le ressort du clapet anti-retour 23 fournira un équivalent de pression de 1Mpa (1Ø bars).

Le fonctionnement est le suivant:

Lorsque l'un gonfle le système à la pression de travail désirée (par exemple 1ØMpa (1ØØ bars)), cette pression de 1ØMpa s'établit dans tout le circuit (sauf dans les conduits 11 et 11a). Le limiteur de pression 1Ø est équilibré à la fermeture, le robinet piloté 17 est équilibré à l'ouverture, le ressort 19 ferme la surface s1. Il faut donc, dans cet exemple 1ØMpa + ε pour ouvrir le limiteur de pression 1Ø, mais il faut 1Ø,5 Mpa (1Ø5 bars) pour ouvrir la surface s1, fermer simultanément la surface s′1′ et 11Mpa (11Ø bars) pour ouvrir le clapet anti-retour 23 pour que l'huile contenue dans le vérin 5 puisse s'écouler vers l'accumulateur 4.

**Revendications**

1. Système hydraulique de sécurité pour charrue du type comportant un timon en T portant au moins un soc, ledit timon pouvant basculer vers le haut au passage d'un obstacle, à l'encontre d'un système élastique constitué par un vérin (5) relié à un accumulateur oléopneumatique (4) et comportant deux clapets (10, 12), le premier clapet (10) étant un clapet limiteur de pression à tarage réglable qui s'ouvre en provoquant l'ouverture du second clapet, le second clapet (12) comporte un tiroir (13) ayant une face avant, soumise à la pression communiquée par le premier clapet (10), et une face arrière, soumise à la pression d'un ressort (19), caractérisé par le fait que le tarage du second clapet varie automatiquement avec la pression de gonflage de l'accumulateur à travers un robinet automatique piloté (17) qui relie l'accumulateur (4) à la chambre du second clapet (12) située du côté de la face arrière du tiroir (13), ledit robinet étant normalement ouvert quand la pression dans le vérin (5) est égale à la pression de gonflage de l'accumulateur, tandis que, lorsque la pression dans le vérin (5) augmente par suite de la butée du soc sur un obstacle, il se ferme, maintenant ainsi la pression de gonflage derrière le tiroir (13) qui se déplace par suite de l'ouverture du premier clapet (10) pour une pression donnée, et fait communiquer le vérin (5) avec l'accumulateur (4).

2. Système hydraulique selon la revendication 1, caractérisé par le fait que l'ouverture et la fermeture du robinet piloté (17) sont commandées par un piston de pilotage (20) soumis d'un côté à la pression du vérin (5) et de l'autre à celle de l'accumulateur (4).

3. Système hydraulique selon l'une quelconque des revendications 1 et 2, caractérisé par le fait que le tarage du second clapet (12) à tiroir (13) se fait au moyen d'un second accumulateur oléopneumatique (16) chargé à la pression de gonflage du premier accumulateur (4) et du ressort (19).

4. Système hydraulique de sécurité pour charrue du type comportant un timon en T portant au moins un soc, ledit timon pouvant basculer vers le haut au passage d'un obstacle, à l'encontre d'un système élastique constitué par un vérin (5) relié à un accumulateur oléopneumatique unique (4) et comportant deux clapets (10, 22), le premier clapet (10) étant un clapet limiteur de pression à tarage réglable qui s'ouvre en provoquant l'ouverture du second clapet, le second clapet (22) comporte un tiroir (13) ayant une face avant, soumise à la pression communiquée par le premier clapet (10), et une face arrière, soumise à la pression d'un ressort (19), caractérisé par le fait que le tarage du second clapet varie automatiquement avec la pression de gonflage de l'accumulateur (4), le second clapet (22) étant un clapet double, l'accumulateur (4) étant relié à une chambre arrière (22a) du clapet double (22), située du côté de la face arrière du tiroir (13), tant que le premier clapet (10) limiteur de pression est fermé, tandis que l'ouverture de ce dernier provoque le recul du tiroir avec la fermeture de la liaison entre la chambre arrière (22a) du clapet double (22) et l'accumulateur (4) en même temps que l'ouverture de la liaison entre le vérin (5) et l'accumulateur (4).

## Claims

1. Hydraulic safety device for a plow comprising a T-leg carrying at least one share, said leg being able to swing upwardly when crossing an obstacle, against an elastic device made up of a cylinder (5) connected to an accumulator (4) and comprising two valves (10, 12), the first valve (10) being an adjustable pressure relief valve, the opening of which causes the opening of the second valve, the second valve (12) comprising a spool (13) with a front face on which acts the pressure transmitted by the first valve (10), and a rear face on which acts the pressure of a spring (19), characterized in that the calibration of the second valve automatically varies with the pressure of the accumulator through a pilot controlled valve (17) connecting the accumulator (4) to the chamber of the second valve (12) located at the side of the rear face of the spool (13), said valve being normally opened when the pressure in the cylinder (5) is equal to the pressure of the accumulator, while it closes when the pressure in the cylinder (5) increases due to the abutment of the share on an obstacle, so maintaining the pressure of the accumulator behind the spool (13) which moves due to the opening of the first valve (10) for a given pressure and brings the cylinder (5) in communication with the accumulator (4).

2. Hydraulic device according to claim 1, characterized in that the opening and the closing of the pilot controlled valve (17) are controlled by a pilot piston (20) at one side of which acts the pressure of the cylinder (5) and at the other side of which acts the pressure of the accumulator (4).

3. Hydraulic device according to anyone of claims 1 and 2, characterized in that the calibration of the second valve (12) with a spool (13) is achieved by means of the spring (19) and of a second accumulator (16) charged at the pressure of the first accumulator (4).

4. Hydraulic safety device for a plow comprising a T-leg carrying at least one share, said leg being able to swing upwardly when crossing an obstacle, against an elastic device made up of a cylinder (5) connected to a single accumulator (4) and comprising two valves (10, 22), the first valve (10) being an adjustable pressure relief valve, the opening of which causes the opening of the second valve, the second valve (22) comprising a spool (13) with a front face on which acts the pressure transmitted by the first valve (10), and a rear face on which acts the pressure of a spring (19), characterized in that the calibration of the second valve automatically varies with the pressure of the accumulator (4), the second valve (22) being a dual valve, the accumulator (4) being connected to a rear chamber (22a) of the dual valve (22), located at the side of the rear face of the spool (13), as long as the first adjustable pressure relief valve (10) is closed, while the opening of this latest causes the moving back of the spool which closes the connection between the rear chamber (22a) of the dual valve (22) and the accumulator (4) and simultaneously opens the connection between the cylinder (5) and the accumulator (4).

## Patentansprüche

1. Hydraulische Sicherheitseinrichtung für einen Pflug, der einen T-förmigen Grindel aufweist, welcher zumindest ein Schar trägt, und der, beim Übergang eines Hindernises, nach oben gegen die Wirkung einer elastischen Einrichtung schwenken kann, die aus einem mit einem Druckspeicher (4) gekuppelten Arbeitszylinder (5) besteht und die zwei Ventile (10, 12) aufweist, wobei das erste Ventil (10) ein einstellbares Druckbegrenzungsventil ist, dessen Öffnen das Öffnen des zweiten Ventils bewirkt, und wobei das zweite Ventil (12) einen Schieber (13) aufweist, dessen Frontfläche mit dem vom ersten Ventil (10) übertragenen Druck und dessen Rückfläche mit dem von einer Feder (19) erzeugten Druck beansprucht werden, dadurch gekennzeichnet, dass die Einstellung des zweiten Ventils mit dem Aufpumpdruck des Druckspeichers durch ein automatisch gesteuertes Ventil (17) automatisch variiert, welches den Druckspeicher (4) mit der sich seitens der Rückfläche des Schiebers (13) befindliche Kammer des zweiten Ventils (12) verbindet, wobei das Ventil (17), wenn der Druck im Arbeitszylinder (5) mit dem Aufpumpdruck des Druckspeichers gleich ist, normalerweise offen ist, während er sich schliesst, falls sich der Druck im Arbeitszylinder (5) aufgrund des Anschlags des Schares auf ein Hindernis vergrössert, und dadurch den Aufpumpdruck hinter dem Schieber (13) aufrechterhält, welcher sich aufgrund des Öffnens des ersten Ventils (10) bei bestimmtem Druck bewegt und den Arbeitszylinder (5) mit dem Druckspeicher (4) kuppelt.

2. Hydraulische Einrichtung gemäss Anspruch 1, dadurch gekennzeichnet, dass das Öffnen und das Schliessen des gesteuerten Ventils (17) mittels eines Steuerkolbens (20) gesteuert werden, der einerseits mit dem Druck im Arbeitszylinder (5) und andererseits mit dem Druck des Druckspeichers (4) beansprucht wird.

3. Hydraulische Einrichtung gemäss Anspruch 1 oder 2, dadurch gekennzeichnet, dass die Einstellung des zweiten mit dem Schieber (13) versehenen Ventils (12) mittels der Feder (19) und eines zweiten Druckspeichers (16), der mit dem gleichen Druck aufgepumpt ist als der erste Druckspeicher (4), erfolgt.

4. Hydraulische Sicherheitseinrichtung für einen Pflug, der einen T-förmigen Grindel aufweist, welcher zumindest ein Schar trägt, und der, beim Übergang eines Hindernisses, nach oben gegen die Wirkung einer elastischen Einrichtung schwenken kann, die aus einem mit einem einzigen Druckspeicher (4) gekuppelten Arbeitszylinder (5) besteht und die zwei Ventile (10, 22) aufweist, wobei das erste Ventil (10) ein einstellbares Druckbegrenzungsventil ist, dessen Öffnen das Öffnen des zweiten Ventils bewirkt, und wobei das zweite Ventil (22) einen Schieber (13) aufweist, dessen Frontfläche mit dem vom ersten Ventil (10) übertragenen Druck und dessen Rückfläche mit dem von einer Feder (19) erzeugten Druck beansprucht werden,
dadurch gekennzeichnet, dass die Einstellung des zweiten Ventils mit dem Aufpumpdruck des Druckspeichers (4) automatisch variiert, und dass das zweite Ventil (22) ein Doppelventil ist, wobei der Druckspeicher (4) mit einer hinteren, auf der Seite der Rückfläche des Schiebers (13) angeordneten Kammer (22a) des Doppelventils (22) gekuppelt ist, solange das erste Druckbegrenzungsventil (10) geschlossen ist, während das Öffnen dieses Druckbegrenzungsventils den Rückgang des Schiebers bewirkt, was zum Schliessen der Kupplung zwischen der hinteren Kammer (22a) des Doppelventils (22) und dem Druckspeicher (4) gleichzeitig zum Öffnen der Kupplung zwischen dem Arbeitszylinder (5) und dem Druckspeicher (4) führt.

EP 0 350 343 B1

## Fig.1

## Fig.2

7

*Fig:3*

*Fig:4*